# EUROPEAN PATENT APPLICATION

(11) **EP 4 696 626 A1**
(43) Date of publication of application: **18.02.2026**
(21) Application number: 24865870.0
(22) Date of filing: 12.09.2024
(51) Int. Cl.: B65G 65/32, B65B 69/00, H01M 4/04, B26D 1/04, B26D 5/02, B26D 1/00

(54) **CUTTING DEVICE AND POWDER INPUT FACILITY INCLUDING SAME**

(30) Priority: 15.09.2023 KR 20230123416; 10.09.2024 KR 20240123254
(71) Applicant: LG Energy Solution, Ltd., Seoul 07335 (KR)
(72) Inventor: CHOI, Jae Heon, Daejeon 34122 (KR); JUN, Sang Eun, Daejeon 34122 (KR); WON, Seung Jae, Daejeon 34122 (KR); CHUNG, Sung Hee, Daejeon 34122 (KR); HONG, Jong Hyeok, Daejeon 34122 (KR); KIM, Won Jung, Daejeon 34122 (KR)
(74) Representative: Plasseraud IP
(86) International application number: PCT/KR2024/013892
(87) International publication number: WO 2025/058431

(57) **Abstract**

A cutting device according to the present invention includes a cutting member configured to cut a powder storage bag in which powder is stored, wherein the cutting member includes: a placement plate in which a through-hole is defined; and a cutting blade provided to extend upward on an edge of the through-hole and configured to cut a point spaced apart from a vertical line passing through a central portion of the powder storage bag.

## Description

### TECHNICAL FIELD

### CROSS-REFERENCE TO RELATED APPLICATION

The present application claims the benefit of the priority of Korean Patent Application Nos. 10-2023-0123416, filed on September 15, 2023, and 10-2024-0123254, filed on September 10, 2024, which are hereby incorporated by reference in their entirety.

### TECHNICAL FIELD

The present invention relates to powder input equipment including a cutting device, which inputs powder stored in a powder storage bag, and more particularly, to powder input equipment including a cutting device, which is capable of improving work efficiency, work continuity, and powder flowability and minimizing an amount of residual powder remaining in the powder storage bag.

### BACKGROUND ART

In general, secondary batteries are widely used in portable devices as well as electric vehicles or hybrid vehicles driven by electrical power sources, and power storage devices.

In addition, secondary batteries are attracting attention as new energy sources not only because the secondary batteries drastically reduce the use of fossil fuels, but also because the secondary batteries do not produce any by-products depending on the use of energy.

A method for manufacturing such a secondary battery includes an electrode process, an assembly process, and an activation process.

In particular, the electrode process includes a mixing process of mixing an electrode active material, a conductive material, a binder, and a solvent to prepare slurry and a coating process of applying the slurry to a current collector.

In the mixing process, a powder storage bag storing powder that is an electrode active material is prepared and then fixed, the powder is input into a mixing member through a discharge part of the powder storage bag, and the conductive material, the binder, and the solvent are input into the mixing member to be mixed with each other to manufacture the slurry.

Here, in order to discharge the powder stored in the powder storage bag, a worker may cut a portion of the powder storage bag to provide the discharge part so that the powder is discharged.

However, the conventional mixing process has problems, in which work efficiency, work continuity, and powder flowability are poor because the worker has to cut the powder storage bag, and a large amount of powder remains in the powder storage bag because the discharge part provided in the powder storage bag is irregular.

### DISCLOSURE OF THE INVENTION

### TECHNICAL PROBLEM

An object of the present invention is to provide a cutting device that cuts a powder storage bag, in which powder is stored, to provide a discharge part, thereby improving work efficiency, work continuity, and powder flowability, and in particularly, minimizing a residual amount of powder remaining in the powder storage bag, and powder input equipment including the same.

### TECHNICAL SOLUTION

A cutting device according to the present invention may include a cutting member configured to cut a powder storage bag in which powder is stored, wherein the cutting member may include: a placement plate in which a through-hole is defined; and a cutting blade provided to extend upward on an edge of the through-hole and configured to cut a point spaced apart from a vertical line passing through a central portion of the powder storage bag.

The cutting device may include a cutting blade configured to cut a point spaced apart from a vertical line passing through a central portion thereof.

The cutting blade may be provided in two or more to cut two or more points spaced apart from the vertical line passing through the central portion of the powder storage bag.

The cutting blade may be configured to vertically extend upward.

An upper side of the cutting blade may have a sharp front end of which a width is gradually narrowed toward a center thereof.

The through-hole may have four edges, the cutting blade may be provided in four on the four edges of the through-hole, respectively, and in the four cutting blades, two cutting blades that are in contact with each other may be connected to each other to form a first cutting hole and a second cutting hole corresponding to the first cutting hole in the powder storage bag.

The first cutting hole may have a shape corresponding to the shape in which two cutting blades, which are in contact with each other, of the four cutting blades are connected to each other, and the second cutting hole may have a shape corresponding to the shape in which remaining two cutting blades of the four cutting blades are connected to each other.

The through-hole may have four edges, the cutting blade may be provided in three on three edges of the four edges of the through-hole, and the three cutting blades may be connected to each other to form a third cutting hole in the powder storage bag.

The third cutting hole may have a shape corresponding to the shape in which the three cutting blades are connected to each other.

The cutting device may further include a lower elevation member configured to move the cutting member upward toward the powder storage bag.

The placement plate may have one or more open hole in an edge thereof.

The cutting blade may have a height of 140 mm to 1,800 mm.

Powder input equipment may include: a fixing device to which a powder storage bag, in which powder is stored, is fixed; an input device provided below the fixing device and provided with an input port into which the powder stored in the powder storage bag is input; and a cutting device prepared configured to cut the powder storage bag so that the powder stored in the powder storage bag is input into an input port of the input device.

The fixing device may further include an upper elevation member configured to move the powder storage bag downward toward the input port.

### ADVANTAGEOUS EFFECTS

The powder input equipment of the present invention may be characterized by including the cutting device provided with the cutting member. The cutting member may include the cutting blade that cuts the point spaced apart from the vertical line passing through the placement plate and the central portion of the powder storage bag. Due to these features, even the powder remaining on the inner edge of the powder storage bag may be effectively discharged, and thus, the powder remaining in the powder storage bag may be minimized to improve the work efficiency and continuity and the powder flowability.

In addition, in the powder input equipment of the present invention, the cutting blade may be characterized in that two or more cutting blades are provided to cut the two or more points spaced apart from the vertical line passing through the central portion of the powder storage bag. Due to these features, even the powder remaining on the inner edge of the powder storage bag may be effectively discharged, and thus, the powder remaining in the powder storage bag may be minimized.

In addition, in the powder input equipment of the present invention, the cutting blade may be characterized to be configured to extend vertically upward. Due to these feature, the cutting hole may be stably formed in the powder storage bag.

In addition, in the powder input equipment of the present invention, the cutting blade may be characterized in that the four cutting blades are provided at the four edges of the through-hole formed in the input device, respectively, and the two cutting blades that is in contact with each other, are connected to each other to form the first cutting hole and the second cutting hole corresponding to the first cutting hole in the powder storage bag, respectively. Due to these features, the discharge port for the powder may be secured to be large, thereby minimizing the powder remaining in the powder storage bag.

In addition, in the powder input equipment of the present invention, the cutting blade may be characterized in that the three cutting blades are provided in the three edges of the four edges of the through-hole formed in the input device, and the three cutting blades are connected to each other to form the three cutting holes in the powder storage bag. Due to these features, the discharge port for the powder may be secured to be large, thereby minimizing the powder remaining in the powder storage bag.

In addition, in the powder input equipment of the present invention, the cutting device may be characterized by further including the lower elevation member that moves the cutting member upward toward the powder storage bag. Due to these feature, the cutting blade of the cutting member may stably cut the powder storage bag.

### BRIEF DESCRIPTION OF THE DRAWINGS

FIG. 1 is a front view of powder input equipment according to a first embodiment of the present invention.
FIG. 2 is a perspective view illustrating a cutting device of the powder input equipment according to the first embodiment of the present invention.
FIG. 3 is a front view of FIG. 2.
FIG. 4 is a plan view of FIG. 2.
FIG. 5 is a front view illustrating a state in which a powder storage bag is cut by the powder input equipment according to the first embodiment of the present invention.
FIG. 6 is a bottom view of the powder storage bag in which first and second cutting holes are formed by the cutting device of the powder input equipment according to the first embodiment of the present invention.
FIG. 7 is a perspective view illustrating a state in which powder is discharged from the powder storage bag.
FIG. 8 is a perspective view illustrating a cutting device of powder input equipment according to a second embodiment of the present invention.
FIG. 9 is a front view of FIG. 8.
FIG. 10 is a plan view of FIG. 8.
FIG. 11 is a bottom surface of a powder storage bag in which a third cutting hole is formed by the cutting device of the powder input equipment according to the second embodiment of the present invention.
FIG. 12 is a perspective view illustrating a state in which powder is discharged from the powder storage bag.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Secondary battery according to first embodiment of the present invention]

A secondary battery according to a first embodiment of the present invention includes an electrode assembly and a case, in which the electrode assembly is accommodated, and the electrode assembly has a structure in which separators and electrodes are alternately disposed. Here, the electrodes may be a positive electrode and a negative electrode. That is, the electrode assembly has a structure in which the positive and negative electrodes are alternately disposed with the separator therebetween.

The electrode includes a current collector and an active material applied on the current collector.

A method for manufacturing a secondary battery according to the first embodiment of the present invention, which has the above-described structure includes an electrode process, an assembly process, and a charge/discharge process.

Particularly, the electrode process include a mixing process of mixing powder, which is an electrode active material, (hereinafter, referred to an "powder"), a conductive material, a binder, and a solvent are mixed to manufacture slurry, and a coating process of applying the slurry to the current collector.

Here, in the mixing process, powder 1 is supplied through powder input equipment according to the first embodiment of the present invention.

Particularly, the powder input equipment according to the first embodiment of the present invention may effectively discharge the powder 1 stored in a powder storage bag 10 and thus may minimize the powder 1 remaining in the powder storage bag 10, thereby improving work efficiency and continuity and powder flowability.

Hereinafter, the powder input equipment according to the first embodiment of the present invention will be described in detail with reference to the attached drawings.

### [Powder input equipment according to first embodiment of the present invention]

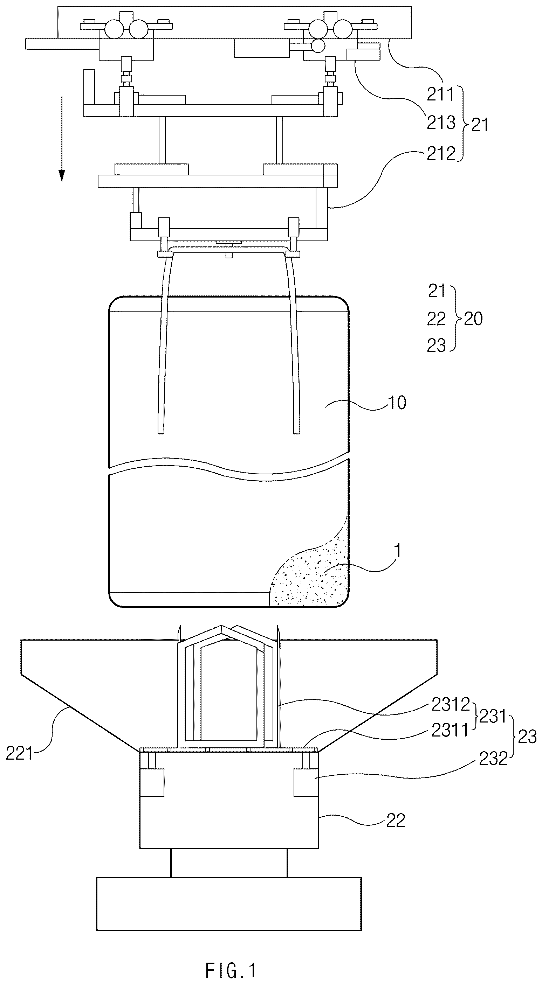

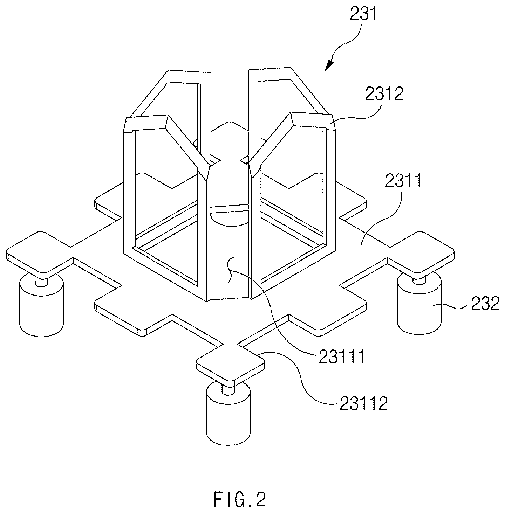

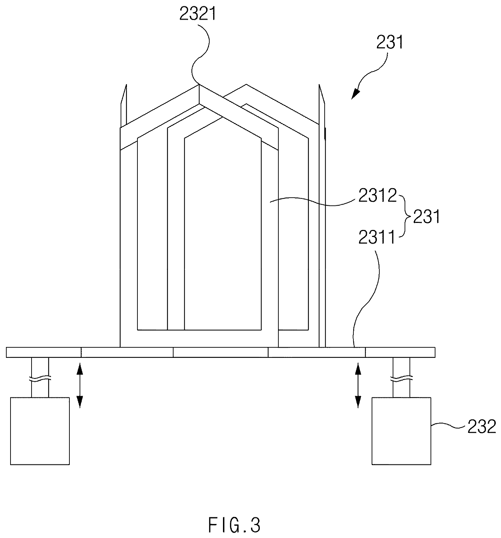

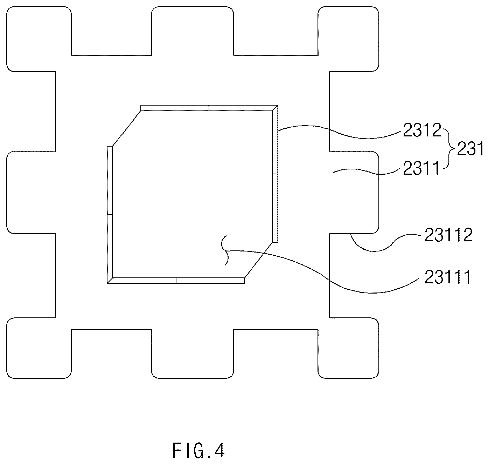

FIG. 1 is a front view of the powder input equipment according to the first embodiment of the present invention, FIG. 2 is a perspective view illustrating a cutting device of the powder input equipment according to the first embodiment of the present invention, FIG. 3 is a front view of FIG. 2, and FIG. 4 is a plan view of FIG. 2.

As illustrated in FIGS. 1 to 4, the powder input equipment 20 according to the first embodiment of the present invention includes a fixing device 21 to which the powder storage bag 10, in which the powder 1 is stored, is fixed, an input device 22 provided with an input port 221, through which the powder 1 stored in the powder storage bag 10 is stored, and a cutting device 23 provided with a cutting member 231 that cuts the powder storage bag 10 so that the powder 1 stored in the powder storage bag 10 is input into the input port 221 of the input device 22.

The powder 1 refers to a finely pulverized electrode active material. That is, the powder 1 refers to a finely pulverized positive or negative electrode active material.

The powder storage bag 10 is configured to store the powder and is made of a synthetic resin material. That is, the powder storage bag 10 includes a storage part in which the powder 1 is stored, and a hook piece that hooks and fixes the storage part to the fixing device.

### Fixing device

The fixing device 21 is configured to fix the powder storage bag 10. That is, the fixing device 21 includes a fixing frame 211 fixed to a ceiling of a building or a structure installed in the building, a coupling frame 212 to which the powder storage bag 10 is coupled, and an upper elevation member 213 that connects the coupling frame 212 to the fixing frame 211 so that the coupling frame 212 is movable vertically.

That is, the fixing device 21 may move the coupling frame 212 vertically by the upper elevation member 213 and be interlocked with the coupling frame 212 so that the powder storage bag 10 ascends or descends toward the input device 22.

Particularly, the fixing device 21 may include the upper elevation member 213. Thus, the powder storage bag 10 fixed to the fixing member may be inserted into the input port 221 of the input device 22, and thus, the powder storage bag 10 may be effectively cut through the cutting device disposed in the input port.

### Input device

The input device 22 is configured so that the powder stored in the powder storage bag 10 is input. In addition, the powder input into the input device 22 is supplied to a mixing device (not shown).

That is, the input device 22 is disposed on the ground or structure below the fixing device 21 and includes the input port 221 into which the falling powder 1 is input through the powder storage bag 10 fixed to the fixing device 21. Here, the input port 221 may be provided as a hopper.

### Cutting device

The cutting device 23 is configured to cut the powder storage bag so that the powder stored in the powder storage bag is discharged, and includes a cutting member 231 and a lower elevation member 233.

The above cutting member 231 is configured to cut the powder storage bag 10 to form a cutting hole for discharging the powder 1 so that the powder 1 stored in the powder storage bag 10 is input into the input port 221 of the input device 22. That is, the cutting member 231 includes a placement plate 2311 and a cutting blade 2312.

The placement plate 2311 has a plate shape to be disposed in the input port 221 of the input device 22, and a through-hole 23111 through which the powder is input is formed in a center of the placement plate 2311.

The cutting blade 2312 is provided to extend upward to an edge of the through-hole 23111 and cuts a bottom surface of the powder storage bag 10 to form the cutting hole for discharging the powder 1.

Here, the placement plate 2311 and the cutting blade 2312 may be integrated with each other and may be made of a metal material.

In the powder input equipment 20 according to the first embodiment of the present invention, which has the above-described structure, the cutting member 231 is disposed in the input port 221 of the input device 22, and then, the powder storage bag 10 moves downward through the fixing member. As a result, the powder storage bag 10 is inserted into the input port 221, and simultaneously, the cutting member 231 is pressed. Here, the cutting blade 2312 of the cutting member 231 cuts the bottom surface of the powder storage bag 10 to form the cutting hole in the powder storage bag 10, and the powder is discharged through the cutting hole of the powder storage bag 10 and is input into the input device 22. Here, the powder storage bag 10 may be supported on the placement plate 2311 of the cutting member 231 to prevent the powder storage bag 10 from being input into the input device 22.

Thus, the powder input equipment 20 according to the first embodiment of the present invention may include the cutting device 23 provided with the cutting member 231 to effectively discharge the powder 1 stored in the powder storage bag 10, thereby inputting the powder 1 into the input device 22.

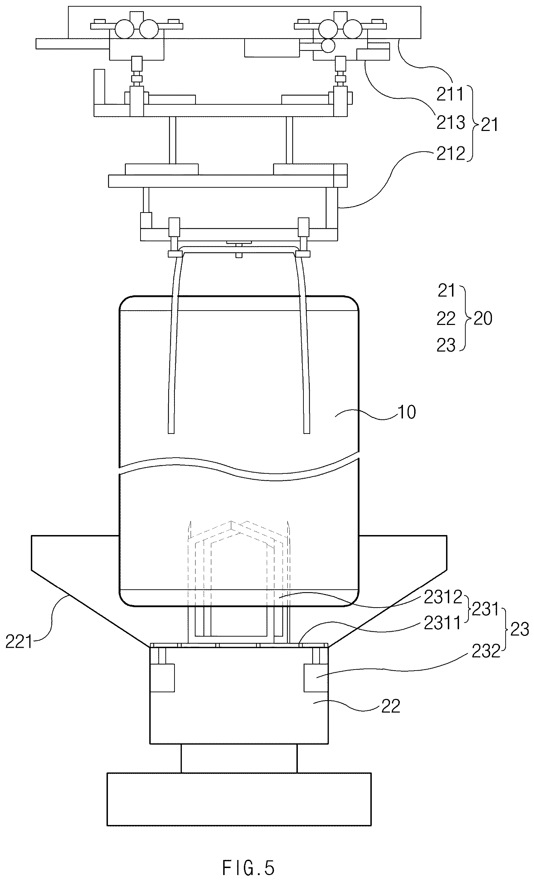

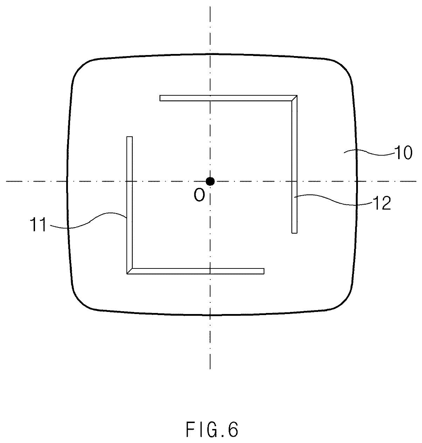

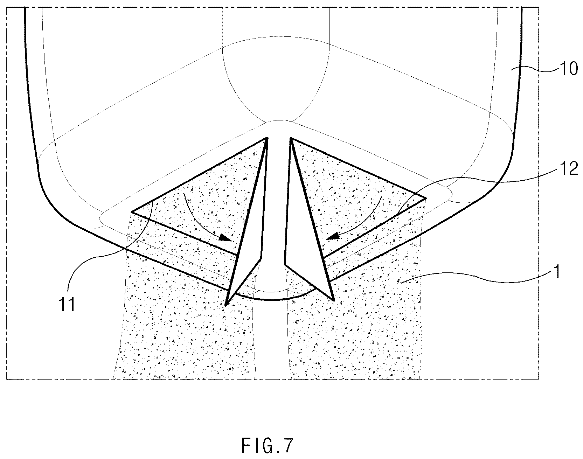

FIG. 5 is a front view illustrating a state in which the powder storage bag is cut by the powder input equipment according to the first embodiment of the present invention, FIG. 6 is a bottom view of the powder storage bag in which first and second cutting holes 12 are formed by the cutting device 23 of the powder input equipment 20 according to the first embodiment of the present invention, and FIG. 7 is a perspective view illustrating a state in which the powder is discharged from the powder storage bag.

Here, the powder input equipment 20 according to the first embodiment of the present invention has a structure that improves flowability and discharge ability of the powder stored in the powder storage bag.

That is, as illustrated in FIG. 6, in the powder injection equipment 20 according to the first embodiment of the present invention, the cutting blade 2312 of the cutting member 231 cuts a point spaced a predetermined distance from the vertical line passing through a central portion O of the powder storage bag 10.

For example, the cutting blade 2312 cuts a central portion of a connecting line that connects the central portion O of the powder storage bag 10 and the edge of the powder storage bag 10.

Thus, the powder input equipment 20 according to the first embodiment of the present invention may significantly reduce a distance between an inner edge of the powder storage bag 10 and the powder cutting hole to effectively discharging the powder disposed on the inner edge of the powder storage bag 10, thereby improving the flowability of the powder stored in the powder storage bag 10 and minimizing the remaining powder.

Particularly, the cutting member 231 may be provided with two or more cutting blades 2312. Thus, two or more points spaced apart from the vertical line passing through the central portion O of the powder storage bag 10 may be cut, and thus, the powder 1 disposed on the inner edge of the powder storage bag 10 may be discharged more quickly.

The cutting blade 2312 may be configured to extend vertically upward. Thus, the cutting blade 2312 may vertically pass through the powder storage bag 10 to prevent cutting defects from occurring and also may form the powder discharge hole having the uniform shape in the powder storage bag 10. Particularly, it is possible to prevent the cutting blade 2312 from being damaged or deformed by a load of the powder storage bag 10.

An upper side of the cutting blade 2312 may have a sharp front end 2321 of which a width is gradually narrowed toward a center thereof. Thus, the cutting hole formed in the bottom surface of the powder storage bag may gradually become larger, and powder discharge capacity may also gradually increase.

The through-hole 23111 may have a rectangular shape having four edges, and the cutting blades 2312 may be provided in four at the four edges of the through-hole 23111, respectively. Thus, the four cutting holes may be formed in the bottom surface of the powder storage bag 10, and thus, the powder discharge capacity may greatly increase.

Particularly, as illustrated in FIG. 6, the four cutting blades 2312 may be provided so that two cutting blades 2312 that are in contact with each other are connected to each other. Thus, a first cutting hole 11 and a second cutting hole 12 corresponding to the first cutting hole 11 may be formed in the bottom surface of the powder storage bag 10.

Here, referring to FIG. 6, the first cutting hole 11 has a shape corresponding to a shape in which two cutting blades 2312, which are in contact with each other, of the four cutting blades 2312 are connected to each other, and the second cutting hole 12 has a shape corresponding to a shape in which the remaining two cutting blades 2312 of the four cutting blades 2312 are connected to each other. That is, the first cutting hole 11 has a '└' shape, and the second cutting hole 12 has a '┐' shape. Thus, as illustrated in FIG. 7, triangular first and second cutting holes 12 may be formed in the bottom surface of the powder storage bag 10 when discharging the powder, and thus, the discharge ability and the flowability of the powder 1 stored in the powder storage bag 10 may be improved, and an amount of residual powder may be minimized.

The cutting device 23 may further include a lower elevation member 233 that moves the cutting member 231 upward toward the powder storage bag 10. That is, the lower elevation member 233 may lift the cutting member 231 so that the cutting blade 2312 of the cutting member 231 stably cuts the powder storage bag 10. Particularly, the cutting device 23 may include the lower elevation member 233 to cut the powder storage bag 10 having various heights without adjusting its height, thereby improving compatibility and workability.

The placement plate 2311 may have one or more open holes 23112 formed in an edge thereof. That is, the open hole 23112 may be formed in the edge of the placement plate 2311 disposed outside the cutting blade 2312. Thus, the powder accumulated on the placement plate 2311 outside the cutting blade 2312 may be pushed and input into the input device 22 through the open hole 23112.

A height of the cutting blade 2312 may be 140 mm to 1,800 mm. If the height of the cutting blade 2312 is less than 140 mm, there is a problem in that the cutting blade 2312 does not cut the powder storage bag 10, or the cutting hole having a set size is not formed. In addition, if the height of the cutting blade 2312 is 1,800 mm or more, the powder storage bag 10 may be stably cut, but after the cutting is completed, the powder storage bag 10 has to be lifted a lot to remove the cutting blade 2312 inserted into the powder storage bag 10, and thus, there may be a problem of deteriorating the workability. Thus, the height of the cutting blade 2312 is formed to be 140 mm to 1800 mm.

Thus, the powder input equipment 20 according to the first embodiment of the present invention may effectively discharge the powder disposed on the inner center and edge of the powder storage bag 10 to minimize the powder remaining in the powder storage bag 10, thereby improving the work efficiency and continuity and the powder flowability. Hereinafter, in describing other embodiments of the present invention, the same component symbols are used for components having the same functions as those of the foregoing embodiments, and redundant descriptions will be omitted.

### [Powder input equipment according to second embodiment of the present invention]

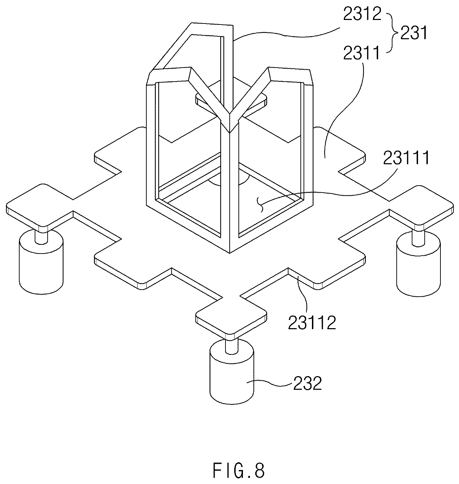

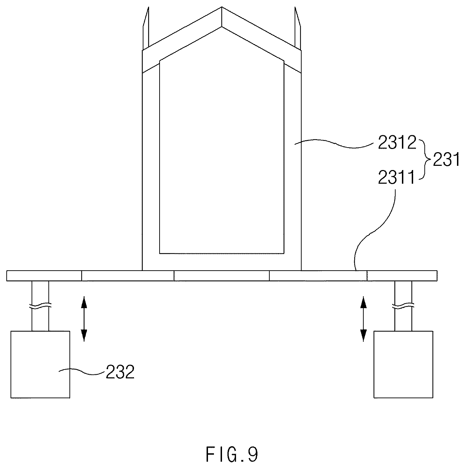

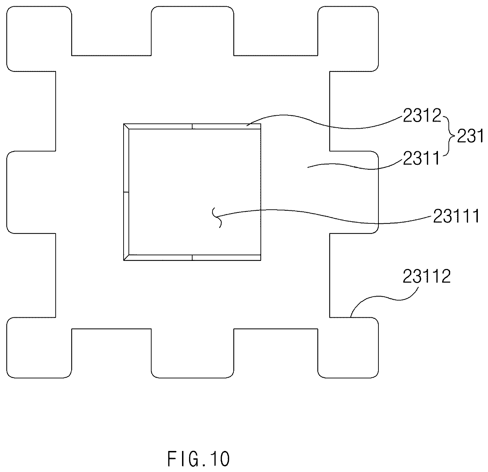

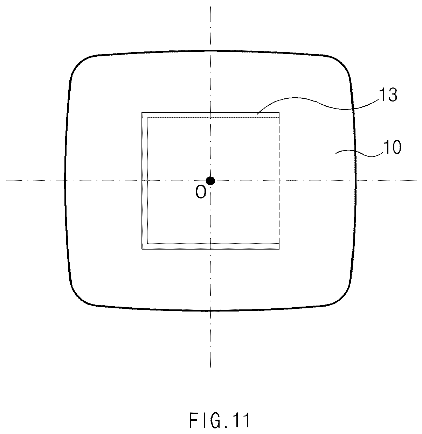

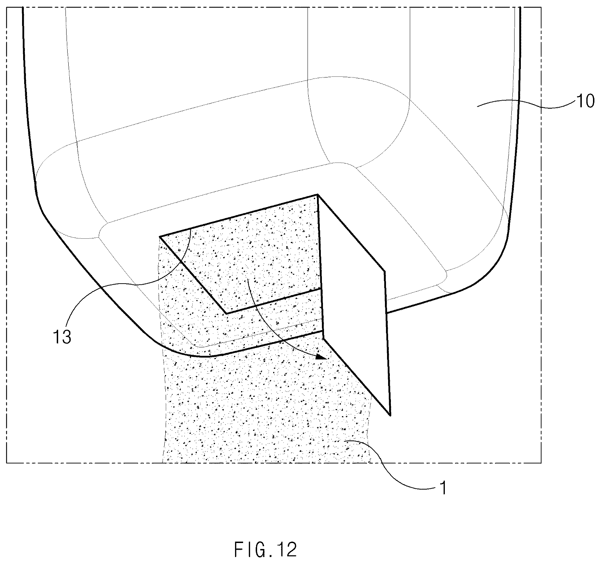

FIG. 8 is a perspective view illustrating a cutting device of powder input equipment according to a second embodiment of the present invention, FIG. 9 is a front view of FIG. 8, FIG. 10 is a plan view of FIG. 8, FIG. 11 is a bottom surface of a powder storage bag in which a third cutting hole is formed by the cutting device of the powder input equipment according to the second embodiment of the present invention, and FIG. 12 is a perspective view illustrating a state in which powder is discharged from the powder storage bag.

Powder input equipment according to a second embodiment of the present invention is provided as another embodiment of the cutting member 231 included in the powder input equipment according to the foregoing first embodiment.

That is, as illustrated in FIGS. 8 to 10, the powder injection equipment 20 according to the second embodiment of the present invention includes a cutting member 231, and the cutting member 231 includes a placement plate 2311 in which a through-hole 23111 is formed and a cutting blade 2312 disposed on an edge of the through-hole 23111.

Here, as illustrated in FIGS. 11 and 12, the through-hole 23111 has four edges, and the cutting blades 2312 are provided in three on three edges of the four edges of the through-hole 23111. Particularly, the three cutting blades 2312 have a structure in which the cutting blades 2312 are sequentially connected to each other, and thus, a third cutting holes 13 may be formed in a bottom surface of the powder storage bag 10.

Referring to FIG. 11, the third cutting hole 13 has a shape corresponding to the shape in which the three cutting blades 2312 are connected to each other. That is, the third cutting hole 13 has a '⊂' shape.

As illustrated in FIG. 12, the powder input equipment 20 according to the second embodiment of the present invention, which has the above-described structure, may discharge the powder 1 stored in the powder storage bag 10 into the input device 22 while forming the rectangular-shaped third cutting hole 13 in the bottom surface of the powder storage bag 10 to minimize the powder 1 remaining in the powder storage bag 10.

Therefore, the powder input equipment 20 according to the second embodiment of the present invention may significantly improve the discharge ability and flowability of the powder stored in the powder storage bag 10 and minimize the amount of residual powder.

As another embodiment, only the cutting device 23 included in the powder input equipment 20 according to an embodiment of the present invention may be manufactured separately and used. This may improve the compatibility.

Although the present invention has been described above with reference to the exemplary drawings, various changes and modifications may be made thereto by one skilled in the art without departing from the scope and spirit of the invention as set forth in the appended claims.

### [Description of the Symbols]

1: Powder
10: Powder storage bag
11: First cutting hole
12: Second cutting hole
13: Third cutting hole
20: Powder input equipment
21: Fixing device
211: Fixing frame
212: Coupling frame
213: Upper elevation member
22: Input device
221: Input port
23: Cutting device
231: Cutting member
2311: Placement plate
23111: Through-hole
23112: Open hole
2312: Cutting blade
2321: Front end
233: Lower elevation member

## Claims

1. A cutting device comprising:
a cutting member configured to cut a powder storage bag in which powder is stored,
wherein the cutting member comprises:
a placement plate in which a through-hole is defined; and
a cutting blade provided to extend upward on an edge of the through-hole and configured to cut a point spaced apart from a vertical line passing through a central portion of the powder storage bag.

2. The cutting device of claim 1, wherein the cutting blade is provided in two or more to cut two or more points spaced apart from the vertical line passing through the central portion of the powder storage bag.

3. The cutting device of claim 2, wherein the cutting blade is configured to vertically extend upward.

4. The cutting device of claim 1, wherein an upper side of the cutting blade has a sharp front end of which a width is gradually narrowed toward a center thereof.

5. The cutting device of claim 1, wherein the through-hole has four edges,
the cutting blade is provided in four on the four edges of the through-hole, respectively, and
in the four cutting blades, two cutting blades that are in contact with each other are connected to each other to form a first cutting hole and a second cutting hole corresponding to the first cutting hole in the powder storage bag.

6. The cutting device of claim 5, wherein the first cutting hole has a shape corresponding to the shape in which two cutting blades, which are in contact with each other, of the four cutting blades are connected to each other, and
the second cutting hole has a shape corresponding to the shape in which remaining two cutting blades of the four cutting blades are connected to each other.

7. The cutting device of claim 1, wherein the through-hole has four edges,
the cutting blade is provided in three on three edges of the four edges of the through-hole, and
the three cutting blades are connected to each other to form a third cutting hole in the powder storage bag.

8. The cutting device of claim 7, wherein the third cutting hole has a shape corresponding to the shape in which the three cutting blades are connected to each other.

9. The cutting device of claim 1, wherein the cutting device further comprises a lower elevation member configured to move the cutting member upward toward the powder storage bag.

10. The cutting device of claim 1, wherein the placement plate has one or more open hole in an edge thereof.

11. The cutting device of claim 1, wherein the cutting blade has a height of 140 mm to 1,800 mm.

12. Powder input equipment comprising:
a fixing device to which a powder storage bag, in which powder is stored, is fixed;
an input device provided below the fixing device and provided with an input port into which the powder stored in the powder storage bag is input; and
a cutting device prepared according to claim1 and configured to cut the powder storage bag so that the powder stored in the powder storage bag is input into an input port of the input device.

13. The powder input equipment of claim 12, wherein the fixing device further comprises an upper elevation member configured to move the powder storage bag downward toward the input port.
